Europäisches Patentamt

European Patent Office

Office européen des brevets

(11) Publication number: **0 460 865 A2**

(12) **EUROPEAN PATENT APPLICATION**

(21) Application number: **91304874.0**

(22) Date of filing: **30.05.91**

(51) Int. Cl.<sup>5</sup>: **F16K 5/22**

(30) Priority: **08.06.90 GB 9012798**

(43) Date of publication of application:
**11.12.91 Bulletin 91/50**

(84) Designated Contracting States:
**DE DK ES FR GB IT**

(71) Applicant: **BTR plc**
**Silvertown House Vincent Square**
**London SW1P 2PL (GB)**

(72) Inventor: **Hollingworth, Keith Jeffery**
**"Kennelground", Gilberts End**
**Hanley Castle, Worcs WR8 0AS (GB)**
Inventor: **Williams, Andrew**
**c/o "Cliftonville", Goulbourne Road**
**St. Georges, Telford, Shropshire (GB)**

(74) Representative: **Treves, Barry William et al**
**BTR Group Patent & Trade Mark Service P.O.**
**Box 504**
**Erdington Birmingham B24 9QH (GB)**

(54) **Plug valve.**

(57)  A plug valve having a sealant reservoir (30) associated with the valve body (1) and control means (31,32,33,34) operable in the event that the plug becomes wedged to cause pressure to be applied to the sealant in the reservoir (30). Sealant then flows to the interior seating surface (50) for the plug causing the plug (11) to become unwedged. The plug (11) may be formed with one or more grooves (15,16) which are so positioned that on rotation of the plug the grooves or each groove (15,16) does not communicate with fluid flowing through the valve.

EP 0 460 865 A2

This invention relates to a plug valve and, more particularly, to a tapered plug valve.

Such valves are used in practice in pipelines in the oil, gas and chemical industries, carrying fluids under relatively high pressures generally in the range 20-400 bar. Often such valves are located in relatively inhospitable environments, e.g. on an offshore oil producing platform and therefore must be maintenance free for a period of, say, 18 months between servicing.

Such valves are provided with a flowable sealant which not only provides a seal between the outer surface of the plug and the facing interior surface of the body against which it seats, but also has a lubricating effect. However, on operation of the valve the fluid in the pipeline comes into contact with the plug surface and removes the sealant. Thus without a thin layer of sealant between the plug and its seating surface the plug may become wedged firmly against this surface and it is impossible for an operator to open or close the valve.

Some valves are provided with inlet ports so that sealant may be injected from a sealant gun into channels formed in the body and leading to the seating surface and thus force the plug off its seating surface, but this use of a gun is not always effective and is not acceptable to many operatives especially in inhospitable environments.

It is known e.g. from British Patent No. 445,636 to provide a tapered plug valve with a sealant reservoir in or on the valve body. Means are provided to cause the sealant to be pressurised continuously. The sealant is led by means of channels in the body from the reservoir to the seating surface. However, in time, sealant is removed by the action of the pipeline fluid and the pressure of the sealant in the reservoir falls so that none flows to the seating surface. As a result the thin layer of the sealant between the plug and its seating surface disappears and the plug may become wedged firmly.

It is an object of the invention to provide a tapered plug valve construction which reduces or overcomes the above disadvantage.

In accordance with the invention there is provided a tapered plug valve comprising a body having a passageway therethrough for flow of fluid, a tapered bore intercepting said passageway, a tapered plug rotatably mounted in said bore, adapted to block said passageway in a closed position of said valve, said plug having a port adapted to and being in communication with said passageway in an open position of said valve, at least one sealant-carrying groove on the interior surface of the bore, a sealant reservoir associated with the body, a channel by means of which the reservoir is connectable to the groove, and operable control means for causing pressure to be applied as required to sealant in said reservoir to feed sealant to the groove.

The reservoir may be formed integrally within the valve body or in a separate casing which may be secured to the valve body.

The control means may be operable e.g. manually, to cause pressure to be applied directly to the sealant in the reservoir but alternatively may be operable to cause the pressure of the fluid within the passageway (so-called "line pressure") to be applied indirectly to the sealant in the reservoir.

Preferably the plug has at least one sealant carrying groove on its outer surface facing the interior surface of the bore, which or each of which, sweeps across the interior surface, no part of which groove or grooves communicates with said passageway during rotation between the open and closed positions of the valve.

Preferably two sealant carrying grooves are provided, each extending longitudinally of the plug surface, one of said two grooves being positioned diametrically opposite the other.

One embodiment of the invention, a tapered plug valve, will now be described by way of example only with reference to the accompanying drawings of which:-

Figure 1 is a cross-section through the axis of the valve according to the invention;

Figure 2 is a section on line A-A of Figure 1; and

Figure 3 is a partial cross-section on line B-B of Figure 2.

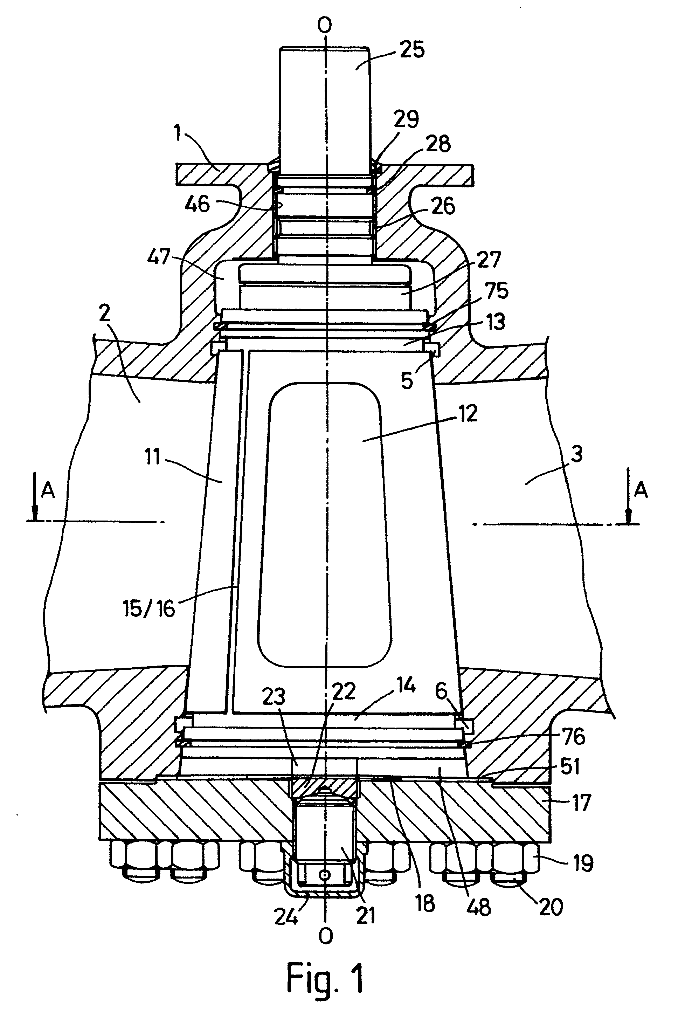

As shown in Figure 1 the valve comprises a valve body 1, a passageway therethrough comprising an inlet port 2 and an outlet port 3, and a tapered plug 4 capable of being rotated about a vertical axis 0-0 through 90° from a fully open position to a fully closed position, and retained in position by means of a cover plate 17.

The valve body 1 is formed with an interior circular cross-section bore for locating the plug 11, the bore comprising an upper section 46 for receiving the upper stem 25 of the plug, which stem may be integrally formed therewith, an upper pressure balancing chamber 47, a tapered central bore having an interior seating surface 50 for the outer surface of the tapered section of the plug, and a lower pressure balancing chamber 48. The bore is provided with two circumferentially extending sealant grooves 5 and 6, the upper, 5 being located near the upper, narrower end of the tapered central bore and the lower, 6 being located near the lower, wider end of the tapered central bore and, connected thereto at their top and bottom ends, two longitudinal grooves 7 and 8, one groove 7 being located diametrically opposite the other 8. The diameter joining the two longitudinal grooves 7 and 8 makes an angle of 45° with the line of the passageway joining ports 2 and 3. Two further longitudinal grooves 9 and 10 may also be provided in the interior surface 50 of the bore, one groove 9 being diametrically opposed to the other 10. The diameter joining grooves 9 and 10 is preferably at right angles to the diameter joining grooves 7 and 8. Grooves 9 and 10 may or may not be connected to the circumferential grooves 5 and 6. In order to prevent the escape of sealant from the circumferential grooves 5 and 6, seals 75 and 76 in the form of, for example, piston rings or o-rings are provided. One seal 75 is positioned above the upper groove 5 and the other seal 76 is positioned below the lower groove 6.

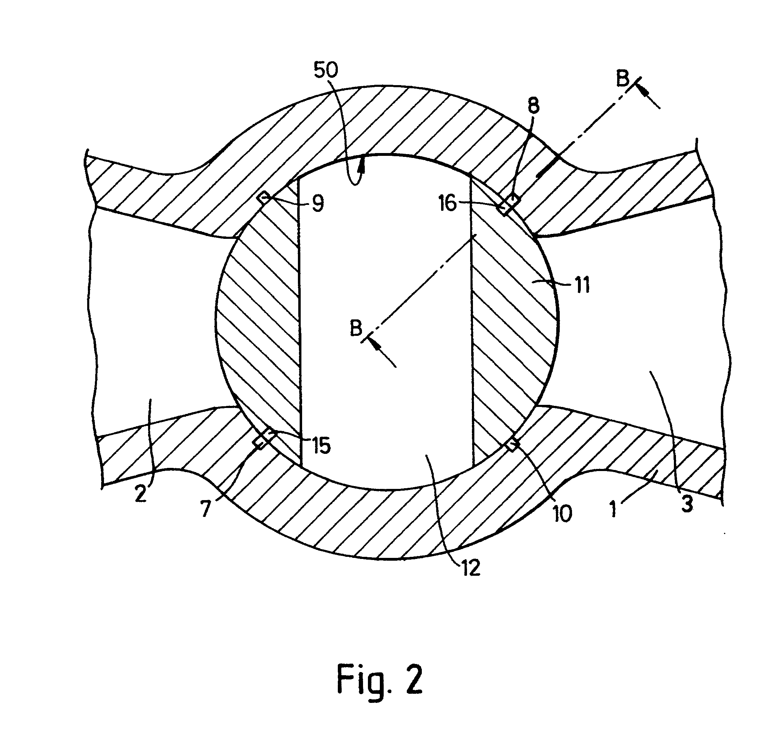

The tapered plug 11 fits into the tapered bore and is provided with a port 12 to connect the inlet and outlet ports 2 and 3 in the valve body when the valve is in the fully open condition. The outer surface of the tapered section of the plug is provided with two circumferential sealant grooves 13 and 14 which respectively face and therefore connect with grooves 5 and 6 formed on the interior surface 50 of the bore. Two diametrically opposed longitudinal grooves 15 and 16 connect with the circumferential grooves 13 and 14 but are not exposed to fluid flowing through the valve as they sweep across the interior surface between the open and closed positions i.e. they always face the interior surface 50 of the bore during normal operation of the valve. As shown in Figure 2, when the valve is in the closed condition, i.e. the port 12 in the plug is at right angles to the line of the passageway through the valve, longitudinal grooves 15 and 16 in the plug are directly aligned with longitudinal grooves 7 and 8 on the interior surface 50 of the bore respectively.

The plug may also be provided with channels (not shown in the drawings) one extending upwards and the other downwards from the port 12 to connect with the upper and lower chambers 47 and 48 respectively. A check valve is provided in each channel to prevent sealant flow from one or other of the two chambers into the port. The provision of these channels allows the pressure of fluid in the port i.e. line pressure, to be applied to the top and bottom of the plug, therefore "balancing" the plug and reducing the possibility of the plug wedging through the application of line pressure to the wide end only.

The cover plate 17 acts against thrust bearings 22 and 23 at the lower, wide end of the plug and retains it in position in the body. The cover is attached to the base of the body by means of nuts 19 on studs 20. A circular diaphragm 18 is positioned above the cover plate, its edge seating on a seat 51 formed in the valve body and a central adjusting screw 21 in the cover plate 17 engages the centre of the diaphragm to adjust the pressure within the lower chamber 48 to assist in balancing the plug. A locking cap 24 covers the adjusting screw 21.

At the upper end of the plug a screw-threaded or plain stem is provided. Rotation of this stem by means of a handle or motor (not shown) through 90° via equalizer ring 27 causes the plug to move between the fully-open and fully-closed positions. The stem is sealed into the valve body by suitable sealing means e.g. a primary seal (to atmosphere) 29, a sealant-filled groove 26 and a secondary seal 28. An injection port with suitable check valve may be provided in the upper part of the body adjacent the groove 26 so that sealant may be injected as required. Another injection port with suitable check valve may also be provided adjacent the upper chamber 47. This allows sealant to be injected into the valve body to force the plug away from its seating surface should it become wedged and sealant injection from the reservoir 30 (to be described below) is inoperable because of damage etc.

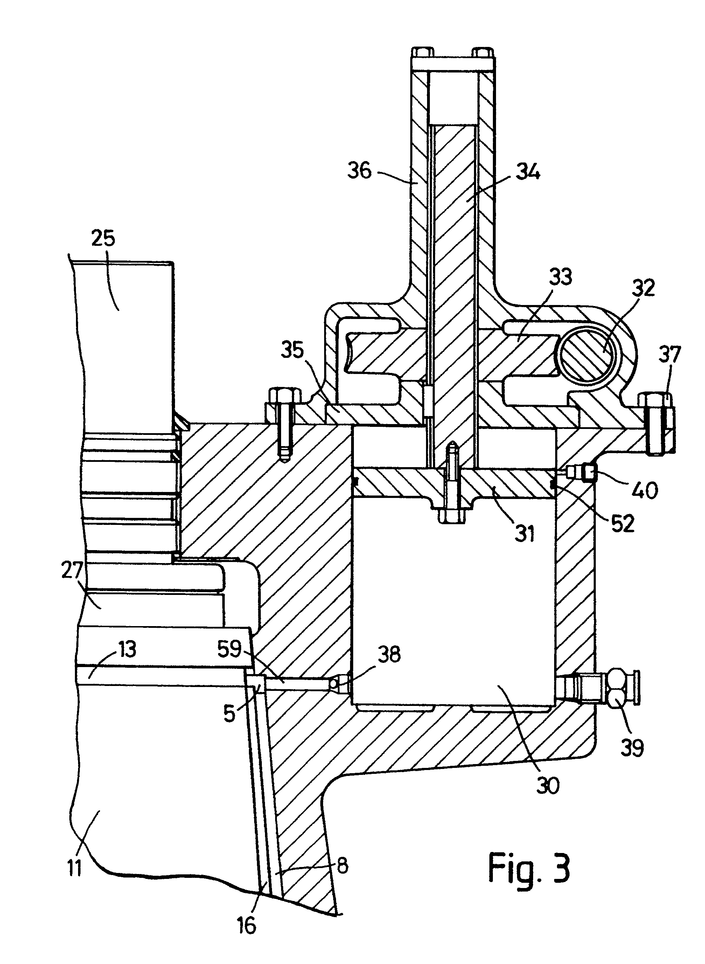

As shown in Figure 3, the valve body is formed e.g. by casting, to have a sealant reservoir integral therewith. However the reservoir may be non-integral with the valve body but attached thereto by means of a suitable manifold.

The reservoir 30 comprises a cylindrical recess within the valve body and has a vertical axis. The base of the reservoir is connected to the upper circumferential groove 5 on the interior surface of the valve body by means of a channel 59. A check valve 38 is provided at the reservoir end of the channel 59. On the upper surface of the valve body a suitable cover 36 encloses the reservoir, the cover being attached to the valve body by bolts 37. The cover houses a vertical threaded spindle 34 which can be raised or lowered by means of a gear wheel 33 driven by a worm shaft 32. At the bottom of the spindle 34 is a piston 31 provided with a seal 52 which may be raised or lowered within the cylindrical reservoir 30. The worm shaft 32 may be driven by means which are not shown in the drawings, e.g. a handle or a motor, to force the piston downwards or to raise it, as required. The driving means e.g. the handle or motor, the worm shaft 32, gear wheel 33, spindle 34 and piston 31 thus form a control means for varying the pressure of the sealant in the reservoir 30.

The reservoir may be filled by raising the piston 31 to the top of its travel, removing the plug 40 at the upper end of the cylindrical reservoir, inserting fresh sealant through the sealant inlet port 39 at the base of the reservoir, until sealant appears through the hole normally filled by the plug 40. The plug 40 is then returned to its hole and the sealant inlet port 39 closed.

In practise, if the valve plug becomes wedged and an operative is unable to turn the plug via the stem 25, the sealant in the reservoir may be pressurised by turning the worm shaft 32 and forcing the piston 31 downwards through the gearing effect of the gear wheel 33 and the vertical spindle 34. Sealant is then forced from the reservoir through the check valve 38, along the channel 59, into the grooves 5, 13 etc on the external surface of the tapered section of the plug and the internal seating surface 50 of the bore. The pressure of the sealant causes the plug to be lifted away from its valve seat so that an operative can then open or close the valve as required. The pressure applied to the sealant may then be reduced.

In an alternative form of the invention, not shown in the drawings, the piston is driven downwards as required by means of a suitable actuator which applies the line pressure of fluid flowing in the valve indirectly to the piston, thus forcing sealant out of the reservoir and into the grooves 5, 13 etc in the valve body and on the plug surface. When the plug has been freed the actuator is operated to remove the line pressure from the piston 31, thereby reducing the pressure of the sealant within the reservoir 30.

## Claims

1. A tapered plug valve comprising a body (1) having a passageway (2,3) therethrough for flow of fluid, a tapered bore intercepting said passageway, a tapered plug (11) rotatably mounted in said bore, adapted to block said passageway (2,3) in a closed position of said valve, said plug (11) having a port (12) adapted to and being in communication with said passageway (2,3) in an open position of said valve, at least one sealant-carrying groove (7,8,9 or 10) on the interior surface (50) of the bore, characterised in that there is provided a sealant reservoir (30) associated with the body (1), a channel (59) be means of which the reservoir (30) is connectable to the groove (7,8,9 or 10), and operable control means (31,32,33,34) for causing pressure to be applied as required to sealant in said reservoir (30) to feed sealant to the groove (7,8,9 or 10).

2. A tapered plug valve according to Claim 1 characterised in that the reservoir (30) is formed integrally within the valve body (1).

3. A tapered plug valve according to Claim 1 characterised in that the reservoir (30) is formed in a separate casing which is secured to the valve body (1).

4. A tapered plug valve according to any one of Claims 1,2 or 3 characterised in that the control means (31,32,33,34) is operable to cause pressure to be applied directly to the sealant in the reservoir (30).

5. A tapered plug valve according to any one of Claims 1,2 or 3 characterised in that the control means (31,32,33,34) is operable to cause the pressure of the fluid within the passageway (2,3) to be applied indirectly to the sealant in the reservoir (30).

6. A tapered plug valve characterised in that the plug (11) has at least one sealant carrying groove (15,16) on its outer surface facing the interior surface (50) of the bore, which or each of which sweeps across the interior surface (50) no part of which groove or grooves (15, 16) communicates with said passageway (2, 3) during rotation between the open and closed positions of the valve.

7. A plug valve according to Claim 6 characterised in that two sealant carrying grooves (15,16) are provided, each extending longitudinally of the plug surface, one (15) of said two grooves being positioned diametrically opposite the other (16).

Fig. 1

Fig. 2

Fig. 3